# EUROPEAN PATENT APPLICATION

(11) **EP 3 690 415 A1**
(43) Date of publication of application: **05.08.2020**
(21) Application number: 19154705.8
(22) Date of filing: 31.01.2019
(51) Int. Cl.: G01K 11/32

(54) **METHOD FOR MONITORING A CHEMICAL PLANT**

(71) Applicant: CASALE SA, 6900 Lugano (CH)
(72) Inventor: FILIPPI, Ermanno, 6976 Castagnola (CH)
(74) Representative: M. Zardi & Co S.A.

(57) **Abstract**

A method for monitoring a chemical plant comprising: providing optical fiber sensors to items and/or pipes of the chemical plant, so that at least one optical fiber sensor is sensitive to the temperature of each of the monitored items; acquisition of temperature data from the optical fiber sensors; determination of a thermal condition of the chemical plant based on the acquired temperature data.

## Description

### Field of the invention

The invention relates to the monitoring and control of a chemical plant and of a chemical process.

### Prior art

The monitoring and control of a chemical plant requires the acquisition of parameters which are indicative of the current operational status.

Said parameters are used commonly not only to control the plant operation but also to simulate with mathematical models the process as it is being operated. This is essential to optimize the plant operation and to have data to understand how the plant is operating, like its energy efficiency, production rate etc.

To reach this goals temperature is an essential parameter to most chemical processes of industrial interest.

In the field of chemical engineering, temperature is normally measured with thermocouples mounted in a tubular fitting named thermowell. This technique however has some drawbacks.

The installation of a thermowell in a pipe or in a reactor requires a passage through the pipe or the pressure vessel of the reactor. This makes unpractical the provision of a large number of sensors, so that the temperature is measured only in few places in the plant, although it would be desirable to know the temperatures everywhere in the plant, to have an accurate picture of how it is running.

### Disclosure of the invention

The aim of the invention is to provide a novel method for the monitoring of a chemical process and of a chemical plant performing the process. Particularly, the invention aims to determine a thermal condition of a chemical plant with improved resolution, accuracy and reliability. The invention also aims to the provision of a more comprehensive set of thermal data concerning a chemical plant and early detection of a warning or alarm condition.

The idea underlying the invention is to take a thermal picture of a chemical plant by means of optical fibre sensors. Optical fibre sensors are positioned in contact with, or inside, items of the chemical plant as well as along pipes. The items type may include converters (e.g. catalytic reactors/converters), heat exchangers, strippers, washing columns, distillation columns, separators, machinery like compressors and turbine. Suitable optical fibre sensors may be positioned around a pressure vessel or along a pipe. Suitable optical fibre sensors may also be mounted inside one or more selected items, e.g. inside a catalytic reactor to detect the temperature of a catalytic bed.

Accordingly, an aspect of the invention is a method for monitoring a chemical plant comprising the steps of:
providing optical fiber sensors to items of the chemical plant, so that at least one optical fiber sensor is sensitive to the temperature of each of the monitored items;
acquisition of temperature data from the optical fiber sensors;
determination of a thermal condition of the chemical plant based on the acquired temperature data.

The monitored items may include pressure vessels and connection pipes of the chemical plant, as well as other items such as heat exchangers or machinery. The term machinery includes e.g. pumps, compressors, turbines. For example the selected items may include any of: a catalytic reactor, a distillation column; a washing column; a stripping reactor, connection pipes between different vessels. Equipment of particular interest may include: a synthesis reactor, for example a reactor for the synthesis of any of ammonia, methanol or urea; a shift reactor; a stripping vessel (e.g. the stripper of a urea plant); a washing column (e.g. in a syngas generation plant), heat exchangers, machinery like pumps, compressors and turbines.

When the monitoring includes connection pipes, one or more optical fiber sensors can be deployed along the monitored pipe(s). The temperature may be taken at given intervals of length throughout the length of the monitored pipes.

The monitored items may include in particular a group of items and the related piping of connection between said items. This group may be a selected section of the plant. Also the whole plant may be monitored according to the invention.

It has to be noted that the invention provides the monitoring of groups of items, for example groups including pressure vessels, heat exchangers, machinery and related piping. Accordingly the invention goes beyond the monitoring of a single apparatus; rather it provides a general thermal picture of a whole plant or at least of a section of the plant including several pieces of equipment. This provide more useful information, e.g. for monitoring, modelling and optimization.

The acquisition of the temperature data and the determination of the thermal condition of the chemical plant can be performed at selected time intervals or continuously.

The temperature data may include the instant temperature of selected locations, which may be combined to provide a thermal picture of the plant at a given instant of time. Thermal images at different instants of time can be stored and compared to monitor the status of the plant.

The determination of a thermal condition of the chemical plant based on the acquired temperature data may include processing the temperature data. This step can be performed by a suitable system, for example a PLC.

For example the step of processing the temperature data may include the steps of determining a gradient of selected temperature data over one or more special coordinate and/or determining gradient or derivative of selected temperature data over time.

Processing the temperature data may also include the detection of local peaks in selected temperature data, for example local maxima or minima of temperature. A local maximum (hot spot) may be due to failure of a cooling system, for example failure of a cooler of a catalytic bed performing a highly exothermic reaction. Early detection of a hot spot may save the catalyst and the reactor itself from a more serious damage.

Processing the temperature data may also include interpolation of selected temperature data. Processing the temperature data may also include estimation of additional temperature data based on the available temperature data, e.g. by extrapolation.

Processing the temperature data may also include a comparison between different sets of temperature data. An advantage of the invention is the acquisition of a global thermal picture of the chemical plant. By making a comparison between different data sets (e.g. temperature of a stream of interest at different locations) the invention may provide information on the condition of the running chemical process.

Based on the processing of the temperature data, a future thermal condition can also be predicted, e.g. a condition of overheating can be detected in advance before it can damage the equipment, or a failure (e.g. failure of a cooling system) can be detected promptly. Also, the condition of a catalytic bed can be estimated and the need to replace the catalyst can be predicted.

A method according to the invention may comprise the comparison of the temperature data with reference temperature data, and/or a comparison of a detected thermal condition with a reference thermal condition.

Based on the comparison with the reference temperature data or reference thermal condition, a status of operation of the chemical plant can be determined. The temperature data may be compared with target temperature data to determine whether or not the plant is running in the optimum condition. The temperature data may also be compared with threshold temperature data to determine whether or not the current thermal stress is acceptable.

For example, a thermal stress of a part of the plant, like a pipe, can be evaluated by comparing the acquired temperature data with the reference data. The step of determining the status of operation of the chemical plant may include determining whether the current condition is a condition of normal operation or not. In the negative case, the step may include determining a condition of warning or alarm.

A wear condition or failure of an item may also be determined. For example, overheating of a catalytic bed may be due to the failure of a heat exchanger disposed to moderate the temperature of the catalytic bed.

The invention comprises the acquisition of temperature data from several items of the chemical plant, particularly from the main items (e.g. main pressure vessels and pipes) and, based on a combination of said data, forming a global thermal picture of the chemical plant. The term of global thermal picture denotes a thermal picture of all the main items of the chemical plant.

The optical fiber sensors may be placed around and/or inside the monitored items. In some embodiments, the invention provides that first optical fiber sensors are placed externally around first items of the chemical plant, and second optical fiber sensors are placed internally inside second items of the chemical plant. Particularly, the first optical fiber sensors (external sensors) may be placed around less critical items, for example around the piping and around selected pressure vessels. The second optical fiber sensors (internal sensors) may be provided to the most critical items, for example a catalytic reactor.

The method of the invention may be used in a method of monitoring and/or controlling a chemical plant. The data about the thermal condition and/or the thermal stress condition may feed a control system which governs the operation of the chemical plant. As the invention provides a detailed thermal picture of the plant, the control itself can be more precise.

The optical fiber sensors suitable to the invention are now described with a greater detail.

The at least one optical fiber includes any of: a multi-point temperature sensor (MTS) including a plurality of sensing points; a distributed temperature sensor (DTS).

The temperature data are acquired by detecting the local temperature of the optical fiber at a plurality of locations in the fiber and as a function of the light transmission in the fiber. For example, detecting a response of the optical fiber to an excitation signal and determining the temperature of one or more locations in the optical fiber based on said response. Preferably, said excitation signal comprising laser pulses and the method comprises sending laser pulses into said at least one optical fiber sensor.

In an embodiment, said least one linear optical fiber sensor is made from quartz glass, which is a form of SiO₂ with amorphous solid structure.

A multi-point MTS sensor may include a plurality of sensing points distributed along a length of the sensor at predetermined locations on the optical fiber. Preferably, said temperature sensing points are distributed at regular intervals along the optical fiber sensor, so that the temperature can be detected at said intervals. Said intervals can be for example spaced apart by 5 cm to 1 meter and more preferably 10 cm or about 10 cm.

The temperature sensing points of an MTS can be obtained by a local modification of the index of refraction of the optical fiber. For example, each sensing point may include a short segment of the optical fiber subjected to Fiber Bragg Grating (FBG). In some embodiments, a temperature sensing point may include a gallium arsenide (GaAs) semiconductor crystal.

In a DTS embodiment, temperature is detected throughout the optical fiber and not at predetermined sensing points. The local temperature of the optical fiber is determined at a plurality of locations in the fiber and as a function of the light transmission in the fiber, for example based on at least one characteristic of light transmission in the fiber. Said locations are spaced apart by intervals of preferably no more than 1 meter, preferably of 5 cm to 1 meter, more preferably of 10 cm or about 10 cm. In a DTS embodiment, the number of temperature detection points is not limited by predetermined sensing points of the fiber and therefore may be larger than MTS. Due to the short distance between said detection points (e.g. 10 cm), an accurate profile of temperature is made available.

In some embodiments a temperature profile as a continuous function of a space coordinate (e.g. length in the optical fiber) can be obtained (e.g. by interpolation) based on the temperature detected at the above mentioned sensing points or detection points.

The method of determining the temperature as a function of the light transmission may include detecting at least one characteristic of light transmission by time domain reflectometry or frequency domain reflectometry. At least one characteristic of light transmission is selected which has a known relation to the temperature of the fiber and, therefore, the temperature of the fiber can also be determined.

The temperature of different locations in the optical fiber can be detected by processing the Raman scattering generated in the optical fiber sensor while laser light propagates through the fiber itself. Temperature locally changes the characteristics of scattered light in the fiber, thus allowing determination of the temperature along the optical fiber.

In all embodiments of the invention, a single optical fiber sensor can deliver the temperature of several locations along the optical fiber itself. Said measures can be advantageously repeated at prescribed time intervals, e.g. every few seconds.

In some embodiments, an optical fiber sensor can be mounted in a thermowell. Said thermowell preferably contains only one optical fiber sensor. Accordingly, said thermowell can have a small diameter, namely of few millimeters. For example the internal diameter of the thermowell is less than 30 mm and preferably 5 mm to 20 mm. A small diameter of the thermowell is advantageous because the convective motions of the gas inside the thermowell are minimized, as well as the interferences caused by said motions. As a consequence, the accuracy and the reliability of the temperature measures are increased.

The invention may involve, among others, monitoring the temperature of a catalytic reactor, i.e. a reactor containing a catalytic bed. Monitoring the temperature of a catalytic bed is important to detect a possible local overheating (hot spot) which may damage the catalyst, and/or to determine the status of the catalyst, for example to determine when the catalyst must be replaced.

A catalytic reactor may comprise several optical fiber sensors extending in different regions of the catalytic bed. Each of said optical fiber sensors is advantageously mounted in a respective thermowell, so that each thermowell contains only one optical fiber sensor. Thanks to the small diameter of the thermowells, a large number of thermowells do not interfere with the operation of the reactor. A further advantageous feature is that said optical fiber sensors may pass through the reactor pressure vessel via a single nozzle, thus reducing the number of high pressure connections.

In normal operation, the temperature should be uniform. A different temperature of different regions of catalyst, above a predetermined threshold, can be interpreted as a deviation from normal operation, for example a contamination or degradation of the catalyst. In some embodiments, said different temperature can be used to generate an alert signal or to modify the temperature at the bed inlet; in case of isothermal beds, it can be used to modify the amount of heat removed or provided, or to modify the temperature of the medium used to remove or provide heat.

In addition, the temperature over certain regions of the catalyst can be detected, thus allowing a control system to make a comparison between different regions of the catalyst.

Another aspect of the invention is a temperature monitoring system a chemical plant, including a data processing unit and a plurality of optical fiber sensors, configured to operate according to the method of any of the above described embodiments. The data processing unit may include a hardware component or a software component and may be part of a more general control system.

Another aspect of the invention is a method of revamping a chemical plant, including the provision of a temperature monitoring system adapted to operate in accordance with the invention.

The invention has the advantages of: precise and reliable temperature data; high resolution due to the ability of the optical fiber to detect temperature at a large number of detection points; the ability to obtain a comprehensive thermal picture of the chemical plant; the ability to promptly detect a warning or alarm condition; a lower cost compared to the conventional technique of thermocouples.

## Claims

1. A method for monitoring a chemical plant comprising:
providing optical fiber sensors to items of the chemical plant, so that at least one optical fiber sensor is sensitive to the temperature of each of the monitored items;
acquisition of temperature data from the optical fiber sensors;
determination of a thermal condition of the chemical plant based on the acquired temperature data.

2. A method according to claim 1, wherein the monitored items include any of: pressure vessels, connection pipes of the chemical plant, heat exchangers, machinery, and wherein the monitored items preferably include any of: a catalytic reactor, a distillation column; a washing column; a stripping reactor; one or more pumps, compressors or turbines.

3. A method according to claim 1 or 2, wherein the acquisition of the temperature data and the determination of the thermal condition of the chemical plant are performed at selected time intervals or continuously.

4. A method according to any of the previous claims, comprising the step of processing the acquired temperature data to determine the thermal condition of the chemical plant.

5. A method according to claim 4 wherein processing the temperature data include any of: determination of a gradient of selected temperature data over one or more spatial coordinate; determination of a gradient of selected temperature data over time; identification of local peaks in selected temperature data; interpolation or extrapolation of selected temperature data; comparison between different sets of temperature data.

6. A method according to claim 4 or 5 wherein processing the temperature data includes a comparison of the temperature data with reference temperature data, and/or a comparison of the thermal condition with a reference thermal condition, and
based on the comparison with the reference temperature data or reference thermal condition, determining a status of operation of the chemical plant.

7. A method according to claim 6, wherein the step of determining a status of operation of the chemical plant includes determining any of: a thermal stress of the plant; a condition of normal operation; a condition of warning or alarm.

8. A method according to any of the previous claims, wherein the optical fiber sensors are placed around and/or inside selected items.

9. A method according to any of the previous claims, wherein first optical fiber sensors are associated externally to first items of the chemical plant, and second fiber sensors are place internally into second items of the chemical plant.

10. A method according to any of the previous claims, comprising the acquisition of temperature data from several items of the chemical plant and, based on a combination of said data, forming a global thermal picture of the chemical plant.

11. A method according to any of the previous claims, wherein the at least one optical fiber includes any of: a multi-point temperature sensor (MTS) including a plurality of sensing points; a distributed temperature sensor (DTS).

12. A method according to any of the previous claims, wherein the temperature data are acquired by detecting the local temperature of the optical fiber at a plurality of locations in the fiber and as a function of the light transmission in the fiber.

13. A method according to claim 12, including: detecting a response of the optical fiber to an excitation signal and determining the temperature of one or more locations in the optical fiber based on said response, wherein the excitation signal preferably comprises laser pulses.

14. A system for monitoring a chemical plant, including a control system and a plurality of optical fiber sensors, configured to operate according to the method of any of claims 1 to 13.
